# EUROPEAN PATENT APPLICATION

(11) **EP 1 225 063 A2**
(43) Date of publication of application: **24.07.2002**
(21) Application number: 02100016.1
(22) Date of filing: 15.01.2002
(51) Int. Cl.: B60B 9/00, B60B 9/02

(54) **Compliant rim and wheel assembly**

(30) Priority: 23.01.2001 US 767497
(71) Applicant: THE GOODYEAR TIRE & RUBBER COMPANY, Akron, Ohio 44316-0001 (US)
(72) Inventor: Burhoe, John Charles Alexander, OH 44333, Akron (US); Houck, Richard Clyde, OH 44216, Clinton (US)
(74) Representative: Leitz, Paul

(57) **Abstract**

A compliant rim (2) has an annular radially outer rim portion for attaching a tire (17), a tread, or a track (16) thereto, a radially inner hub (4) for attaching to an axle, and a plurality of load supporting spokes (3) tangentially mounted to the radially outer rim portion and the hub (4). Each spoke (3) has a curvilinear shape, preferably a spirally formed shape.

## Description

### Technical Field

This present invention relates to integrating a non-pneumatic tire and wheel. In practice this invention will have at least a tread applied to a compliant wheel. The tread will provide all traction properties of a conventional pneumatic tire tread while the compliant wheel will provide all of the other handling characteristics of a tire and wheel.

### Background of the Invention

Non-pneumatic wheels have been used for centuries to carry carriages, wagons and other means of transportation. In the late 19th Century, Dunlop created a successful means of attaching a pneumatic tire to a rim. Since that invention, the benefits of the pneumatic tire mounted to a separate rim have, in terms of ride, speed, and load carrying capacity, outweighed the liabilities of the problem of the loss of air within the pneumatic tire. Nevertheless, the desire for a non-pneumatic tire that has all of the benefits of a pneumatic tire, but without the loss of air issue of pneumatic tires, remains high. Therefore, many attempts have been made by many inventors to develop a non-pneumatic tire.

One method for making non-pneumatic tires involves using a solid elastomeric tire that may or may not have reinforcements in it to provide the desired handling characteristics. For example, US-A- 6,089,292 uses multiple layers of rubber with differing durometers to soften the ride of non-pneumatic tires. A second example disclosed in DE-A- 3134860 uses textile or metallic fibers to give the desired characteristics.

A different approach involves putting slots, holes, or other, variously shaped, cutouts into an elastomeric non-pneumatic tire to soften the ride. An example of this can be found in US-A- 4,832,098. In this application, a unitary structure is composed of a stiff, yet resilient elastomeric material. This is arranged into a specific configuration of oppositely directed ribs, extending at anywhere between 15° and 75° measured from radial planes, which intersect the ribs at their inner ends. A single circumferential planar web member completes the design. This structure permits localized buckling, which allows the tire to absorb sudden impact forces similar to a passenger tire.

Yet another way for making a non-pneumatic tire is to make an integral tire and wheel. In this method, a rubber tread will handle the traction requirements while the wheel handles all the other performance requirements. One prior art example of this may be found in US-A- 4,350,196. In contrast, a conventional pneumatic tire and wheel assembly, the wheel is rigid and simply holds the tire to the axle while the tire handles the performance characteristics. In theory, the parameters controlling the rim could be tuned to the desired handling characteristics.

An object of the present invention is to provide an advanced concept rim that, in combination with a tread, provides all the conventional requirements of a pneumatic tire and wheel assembly.

Another object of the invention is to provide a compliant energy damping rim that can be used with a variety of applications, ranging from non-pneumatic spare tires, conventional pneumatic tires, runflat tires, non-pneumatic tread or tracks. In each application, the rim portion contributes to the compliant nature of the wheel assembly.

### Summary of the Invention

A compliant rim has an annular radially outer rim portion for attaching a tire, a tread, or a track thereto; a radially inner hub for attaching to a vehicle axle and a plurality of load supporting spokes tangentially attached to the radially outer rim portion and the hub. Each spoke has a curvilinear shape, preferably a spirally formed shape affixed at each radially outer end to an inside diameter of the annular rim and each radially inner end of each spoke to the radially outer diameter of the hub.

The compliant rim can be used in several combinations; one being with a pneumatic tire, another with a tread absent the rest of the tire structure, a runflat pneumatic tire, or even a track having a ground engaging tread. In each of the applications, the rim preferably employs at least a radially outer tread portion.

### Brief Description of the Drawings

Figure 1 is a perspective view of the wheel assembly showing the compliant rim and the tread.
Figure 2 is a plan view of the wheel assembly of Figure 1.
Figure 3 is a cross-sectional view of the wheel assembly of Figure 2 taken along lines 3-3.
Figure 4 is a plan view of a plurality of compliant rims used in combination with a track having a radially outer tread.
Figure 5 is a plan view of a wheel assembly depicting a singular spoke affixed at each end by a pin shown in a perspective view.
Figure 6 is a perspective view of the spoke of Figure 5.
Figure 7 is a plan view of a wheel assembly employing the compliant rim with a pneumatic tire.
Figure 8 is a cross-sectional view of the wheel assembly of Figure 7 taken along lines 8-8.

### Detailed Description of the Invention

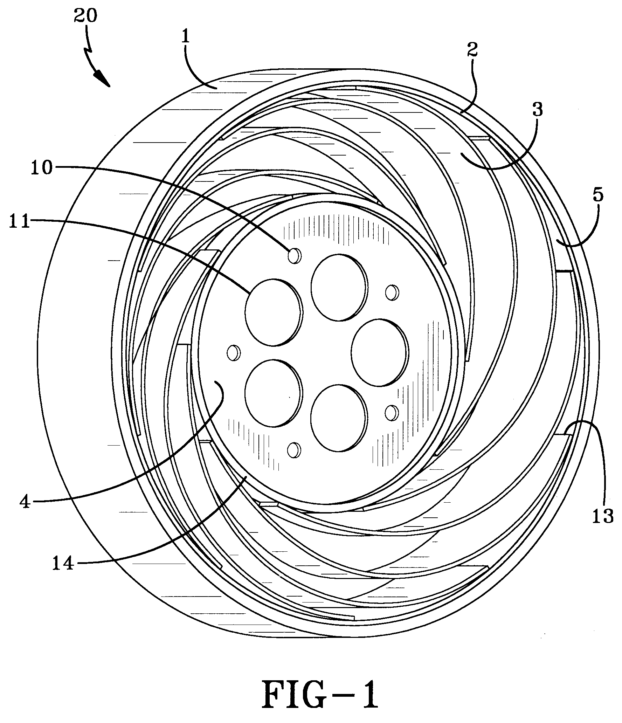

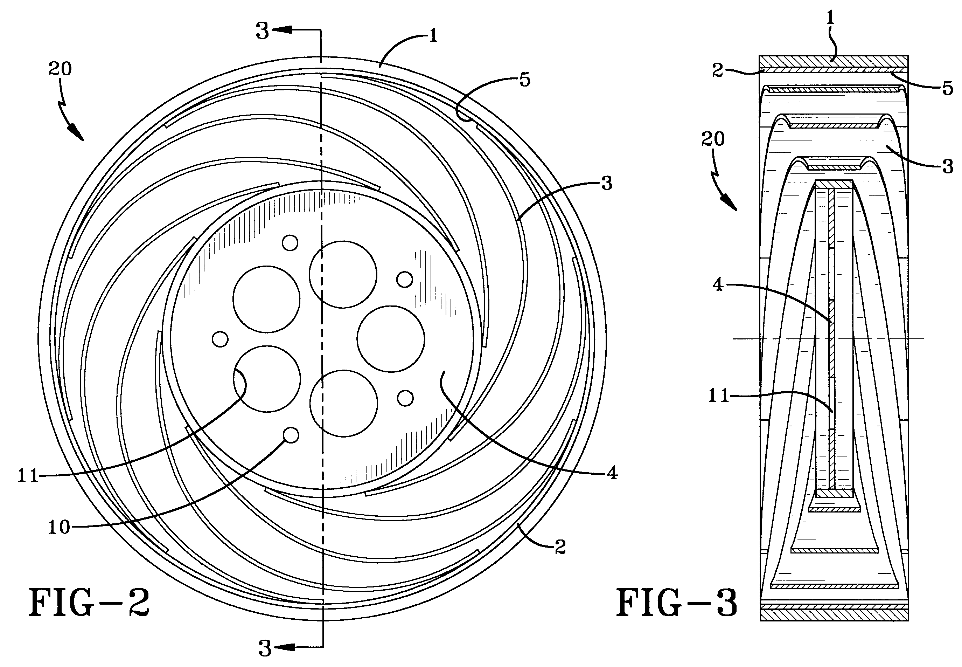

The object of this invention is to provide a design concept for a wheel assembly 20 having a compliant rim and at least a tread as illustrated in Figures 1 and 2.

Figure 3 is a cross-section of the entire wheel assembly. The inner section, better known as the hub 4, is designed so that the whole assembly may be mounted to a vehicle axis. Hole 10 provides for mounting to the axle. The hub can be made from any stiff material, such as iron, aluminum, or composite. If the hub is made from composite materials, then metal grommets or inserts may be needed to minimize wear caused by the studs. Additional cutouts 11 can be designed into the hub. These cutouts 11 can be sized or shaped to accommodate lightening weight reduction or aesthetic purposes. The outer section is composed of a tread 1 and a rim 2. The function of the tread is to provide traction between the wheel and the surface it is riding on. It can have any pattern or compound suitable for this task. The tread is also moderately compliable to absorb minor impacts. In certain applications, the tread can be bonded to a rim 2. Alternatively, the tread can be given a belt shape as is found in tracked vehicles. Finally, when the tread has reached the end of its useful life, it can be removed, and if the wheel is in good condition, a new tread can be applied to the rim.

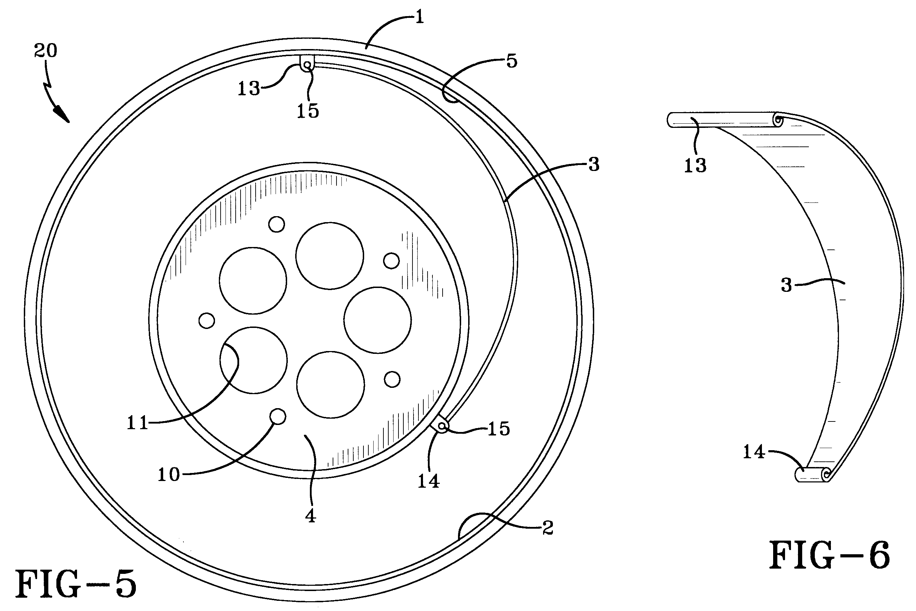

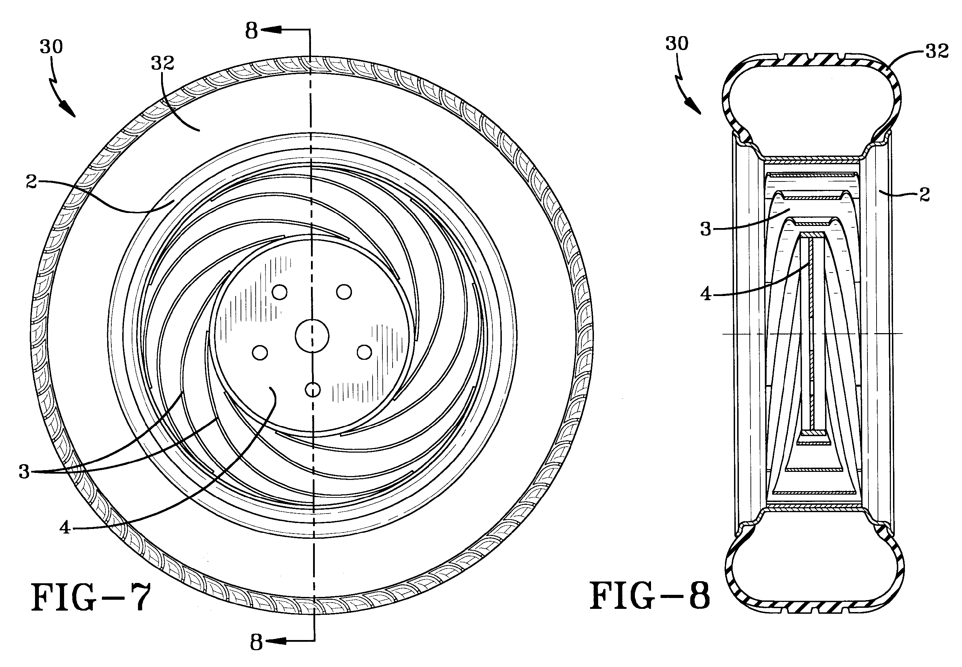

The rim 2 is any suitable material that provides mechanical support to the tread 1, yet is also somewhat resilient to absorb sudden impacts. This present design principally differs from the prior art wheel of US-A- 4,350,196 in how the rim and the hub are connected. In this design, the rim 2 and hub 4 are connected by a series of spirally shaped spokes 3. These spokes attach tangentially at ends 14 to the outer surface of the hub 4, and spiral radially outwardly to the rim 2, where at an end 13 they are tangentially bonded or otherwise attached to the inner surface 5 of the rim. If necessary, the spokes may attach through a pivot pin 15 as shown in Figures 5 and 6 at the spoke-hub and spoke-rim 14,13 to allow flexing between these members. As shown, the spokes 3 sweep through an approximate 130° arc. However, the spokes 3 could sweep through anywhere from 90° to 180°. The tangential contact between the spokes 3 and rim 2 lets the spokes 3 apply an outward pressure to the rim 2, similar to the way air pressure pushes the tread radially outward in a pneumatic tire. Therefore, when an object applies a sudden impact to the rim 2, the rim 2 can buckle at the point of contact. The spokes 3 then act as cantilevered springs to push the rim 2 back into its correct shape. Also, upon impact, there would be a tendency for the rim 2 to no longer be concentric with the hub 4, further enhancing the wheel's ability to absorb sudden impacts. Once the impact loading is removed, the spokes 3, again acting as cantilevered springs, push the rim 2 back into its normal concentric-position relative to the hub. In this arrangement, the wheel assembly theoretically better absorbs the impact loading caused by objects in the path of the wheel. To limit wheel twist, the spokes are shaped as flat strips and the spokes are shaped giving stiffness in the wheel's axial direction, while retaining its radial flexibility. As shown the width of the spoke 3 increases from the hub 4 to the rim 2. Neither the width nor the thickness of the spokes need be constant, but rather, they can be sized and shaped to achieve the desired handling characteristics. Although the rim is illustrated as a single row of spokes 3, it can be designed with two or more rows. The rows can be stacked axially and/or radially to create different spring rate responses. They can even be oriented in opposite directions. In addition, elastomeric sheets may be inserted between radially stacked rows to vary damping rates. The spoke design is constrained only by the width of the hub and rim, and the manufacturability of the spokes. Similarly, the profile of the hub 4 and rim 2 may be shaped and sized to fine-tune the desired handling and mounting characteristics.

The spokes 3 are pretensioned during installation. The spokes 3 are initially attached to either the hub 4 or the rim 2. The spokes are then compressed prior to installation of the remaining piece be that the rim 2 or hub 4, so as to fit into the space between the rim 2 and the hub 4. When the rim or hub is finally positioned around the spokes, the spokes are allowed to expand out to the rim 2 or inward to the hub 4.

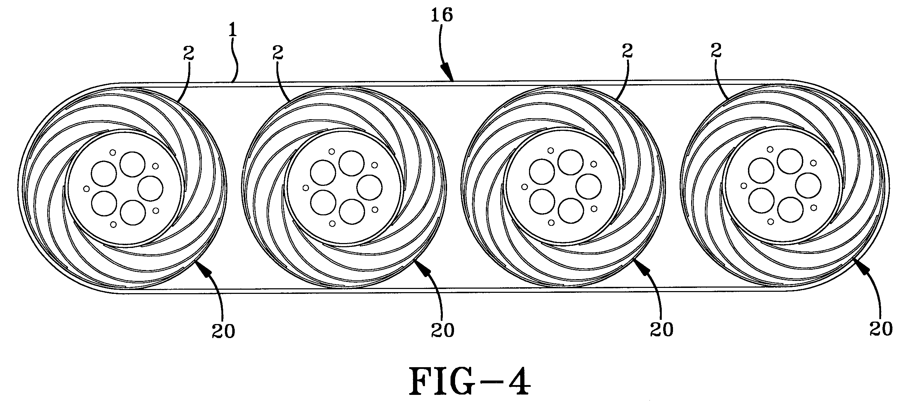

As shown in Figure 4, the wheels, when used in a tracked configuration, would be placed to support the weight of the vehicle, perhaps replacing conventional suspension systems. Two or more such wheels 20 could be used. As illustrated, four rims 20 are shown in combination with a tracked vehicle track 16. The track 16 has a ground engaging tread 1 at the radially outer surface, while the rims 2 contact the radially inner surface of the track 16.

In yet a final embodiment of the invention shown in Figures 5, 7 and 8, the compliant rim 2 can be used with a pneumatic tire 32 to create a wheel assembly 30 wherein both the tire and the rim contribute to the handling performance. Ideally, very low aspect ratio tires or runflat tires with stiffened sidewalls could be combined with the rim 3 to create a softer riding wheel assembly.

With reference to Figures 1 through 3, the rim, hub, and spokes can be made from a variety of materials. It is considered preferable that the spokes and the adjoining portions of the rim and the hub can be made from composite materials designed for high flexure fatigue resistance and adequate bending stiffness to achieve the appropriate spring rates and deflections. Ideally, the rim 2 should have a spring rate of 1000 Ib/in to 2000 Ib/in (1750 to 3500 N/cm) for light truck and passenger car applications. Much lower spring rates in the 400lb/in to 800 Ib/in range (700 to 1400 N/cm) are needed for lawn and garden tractors, and all terrain vehicles commonly referred to as ATV's.

The spokes 3, when fabricated with composite materials, can have a longitudinally high flexibility coupled with axially directed or laterally high stiffness.

As illustrated, the tread 1 and rim 2 have surfaces that are parallel to the axis of rotation.

Alternatively, the tread 1 and underlying rim 2 and spokes 3 can be designed with conical shaped surfaces enabling a higher degree of camber to be used to provide additional stability and cornering capability. This effectively permits a wide range of design parameters such as shoulder wear of the tread and other uneven tread wear issues to be addressed by adjusting the spokes dimensions to accommodate a wide variety of designs.

## Claims

1. A compliant rim comprising:
an annular radially outer rim (2);
a radially inner hub (4); and
a plurality of load supporting spokes (3), each spoke tangentially attached to the radially outer rim and the hub.

2. The compliant rim of claim 1 wherein each spoke (3) has curvilinear shape extending from the hub (4) radially outwardly to the rim (2).

3. The compliant rim of claim 1 wherein each spoke (3) has a spirally formed shape.

4. The compliant rim of claim 1 wherein the spokes (3) are made of a composite material.

5. A wheel assembly comprising:
at least one compliant rim, the compliant rim having an annular radially outer rim (2), a radially inner hub (4), and a plurality of load supporting spokes (3), each spoke being tangentially attached to the radially outer rim and hub;
a tread (1) attached to the radially outer rim.

6. The wheel assembly of claim 5 wherein the tread further includes a pneumatic tire (32) mounted onto the rim.

7. The wheel assembly of claim 5, further including at least two compliant rims and the tread further including a track (16) mounted onto the at least two rims.
